# EUROPÄISCHE PATENTSCHRIFT

(11) **EP 1 151 051 B1**
(45) Veröffentlichungstag und Bekanntmachung des Hinweises auf die Patenterteilung: **20.09.2006**
(21) Anmeldenummer: 99965417.1
(22) Anmeldetag: 30.11.1999
(51) Int. Cl.: C09J 9/00

(54) **KLEBSTOFF MIT MAGNETISCHEN NANOPARTIKELN**
ADHESIVE WITH MAGNETIC NANOPARTICLES
ADHESIF COMPRENANT DES NANOPARTICULES MAGNETIQUES

(30) Priorität: 09.12.1998 DE 19856819
(43) Veröffentlichungstag der Anmeldung: 07.11.2001
(73) Patentinhaber: Henkel Kommanditgesellschaft auf Aktien, 40589 Düsseldorf (DE)
(72) Erfinder: KIRSTEN, Christian, N., D-40789 Monheim (DE); ONUSSEIT, Hermann, D-42781 Haan (DE); CHRISTOPHLIEMK, Peter, D-40595 Düsseldorf (DE)
(86) Internationale Anmeldenummer: PCT/EP1999/009303
(87) Internationale Veröffentlichungsnummer: WO 2000/034404

(56) Entgegenhaltungen:
- DE-A- 3 709 852
- DE-A- 4 130 268
- DE-A- 19 649 893
- GB-A- 1 087 815
- US-A- 4 176 054

## Beschreibung

Die Erfindung betrifft einen magnetische Nanopartikel enthaltenden Klebstoff, Verfahren zu dessen Herstellung sowie die Verwendung eines Nanopartikel enthaltenden Klebstoffs.

Die Wiederverwendung von Werkstoffen spielt in einer auf die Schonung von Rohstoffen bedachten Gesellschaft eine immer größere Rolle. Eine besondere Bedeutung kommt dabei der Schonung nachwachsender Rohstoffe zu. Eine besondere Stellung nimmt hierbei die Zellstoff herstellende und Zellstoff verarbeitende Industrie ein, die in besonders hohem Maße auf den nachwachsenden Rohstoff Holz angewiesen ist.

Um die Holzressourcen zu schonen, wurde in der Vergangenheit mit großen Erfolg immer häufiger die Wiederverwertung von Altpapier durchgeführt, die maßgeblich zur Schonung natürlicher Zellstoffressourcen beiträgt. Hierzu wird Altpapier in der Regel zu Faserbrei (Pulpe) verarbeitet, gegebenenfalls gebleicht und alleine oder zusammen mit primärer Pulpe aus natürlichen Zellstofflieferanten auf Siebe aufgebracht, getrocknet und anschließend zu Rollen konfektioniert. Problematisch wirkt sich jedoch bei der Wiederverwertung von Altpapier aus, daß dessen Verwertung als Faserbrei häufig zu Problemen bei der anschließenden Konfektionierung zu Papierrollen führt.

Altpapier enthält üblicherweise Klebstoffreste, die aus mittels Klebstoff konfektionierten Papierartikeln (Büchern, Prospekten, Haftnotizzetteln und dergleichen) sowie aus anwenderseitig verklebten Papieren stammen. Werden solche Klebstoffreste in zerkleinerter Form mit in den Konfektionierungsprozess von Pulpe zu Papierrollen eingebracht, so kann es bei der Trocknung der weitgehend entwässerten Pulpe zum Schmelzen der Klebstoffreste kommen. Werden solche getrockneten Papierbahnen mit geschmolzenen Klebstoffresten anschließend auf Papierherstellungs- und -konfektionierungsmaschinen zu Papierrollen verarbeitet, so können die geschmolzenen Klebstoffreste zu einem Anhaften der Papierbahn am Herstellungs- oder Konfektionierungsgerät oder zum Verkleben der Papierrolle selbst führen. Beides kann zu Produktionsausfällen und zu verminderter Produktqualität führen. Der Entfernung der Klebstoffreste (allgemein "Stickies" genannt) kommt daher bei der Altpapierverarbeitung eine hohe Bedeutung zu.

Die US-A 4 176 054 beschreibt einen magnetischen Schmelzklebstoff, zu dessen Herstellung eine vermahlene magnetische Substanz mit dem Schmelzklebstoff in flüssigem Zustand vermischt und anschließend dieser Schmelzklebstoff zum Verkleben von Papier benutzt wird. Wird ein mit einem solchen Klebstoff verklebtes Altpapier im Rahmen der Aufarbeitung einem Magnetfeld ausgesetzt, so wird beschrieben, daß sich die klebstoffhaltigen Teile des Altpapiers abscheiden lassen, während die nicht-klebstoffhaltigen Bestandteile wie üblich im Rahmen der Altpapieraufarbeitung weiter verwertet werden können. Zur Separierung der klebstoff haltigen Anteile des Altpapiers wird vorgeschlagen, die Altpapierteile zunächst zu zerkleinern und anschließend entweder im zerkleinerten Zustand oder im Gemisch mit Wasser einem Magnetfeld auszusetzen.

Problematisch wirkt sich bei den aus dem Stand der Technik bekannten Magnetisierungsmethoden allerdings aus, daß durch die Verwendung von relativ großen magnetischen Partikeln eine besonders homogene und feinteilige Vermischung mit Klebstoffen nur schwer möglich ist. Daraus resultiert in der Regel eine inhomogene Verteilung der magnetischen Partikel im Klebstoff.

Sollen Altpapiere wiederverwertet werden, die mit einem solchen Klebstoff behandelt wurden, so werden diese üblicherweise zuerst einem Zerkleinerungsprozeß unterworfen. Hierbei werden auch die am Altpapier anhaftenden Klebstoffe zerkleinert und gegebenenfalls vom Papier gelöst. Mit zunehmender Zerkleinerung der Klebstoffpartikel nimmt jedoch die Wahrscheinlichkeit zu, daß einzelne Klebstoffteilchen aufgrund der inhomogenen Verteilung der magnetischen Partikel oder wegen deren Größe keine magnetischen Partikel mehr enthalten. Solche Klebstoffpartikel können im Magnetfeld nicht vom restlichen Altpapier abgetrennt werden. Sie führen dann zu den bereits beschriebenen "Stickies" beim Herstellungsprozeß, die zu schweren Schäden und Betriebsausfällen an den Papierherstellungs- und Konfektionierungsmaschinen führen können.

Oft sollen Klebstoffe nicht als Schmelzklebstoffe in bei Raumtemperatur fester Form vorliegen, sondern es werden flüssige Klebstoffe gewünscht, die ohne hohen Energieaufwand beim Auftragen eingesetzt werden können. Da Klebstoffe auf Lösemittelbasis in vielen Ländern aus ökologischen Gründen nicht gewünscht werden, stellen Dispersionsklebstoffe auf Wasserbasis hier eine häufig eingesetzte Alternative dar. Der Einsatz von magnetischen Partikeln in Dispersionsklebstoffen gestaltet sich jedoch schwierig, da die magnetischen Partikel oft nicht stabil in eine Dispersion eingebracht werden können und es bei Lagerung zu Phasenseparation kommt.

Der vorliegenden Erfindung lag demnach die Aufgabe zugrunde, einen Klebstoff zur Verfügung zustellen, der die Nachteile des Standes der Technik nicht aufweist.

Gegenstand der vorliegenden Erfindung ist daher ein Klebstoff, enthaltend mindestens ein organisches Polymeres oder ein Gemisch aus zwei oder mehr organischen Polymeren und paramagnetische oder ferromagnetische Nanopartikel mit einer Partikelgröße von 1 bis 1000 nm, oder deren Gemisch, wobei die Nanopartikel ausgewählt sind aus
- Oxiden von Co, Ni, Cr, Mo, W, V, Nb, Ta, Ce, Pr, Nd, Pm, Sm, Eu, Gd, Tb, Dy, Ho, Er, Tm, Yb, Lu oder Ferriten der genannten Elemente, oder ein Gemisch aus zwei oder mehr davon, oder ausgewählt sind aus
- Macchiemit, Goethit oder einem Ferrit der allgemeinen Formel MeOFe₂O₃, wobei Me für ein Element ausgewählt aus der Gruppe bestehend aus Mn, Co, Ni, Cu, Zn, Mg oder Cd steht, oder ein Gemisch aus zwei oder mehr davon,
dadurch gekennzeichnet, daß die Nanopartikel ionisch, koordinativ oder kovalent an das organische Polymere gebunden sind.

Unter einem "Klebstoff" wird im Rahmen der vorliegenden Erfindung ein Material verstanden, das zur verübergehenden oder dauerhaften Verklebung zweier Substrate, insbesondere von Verpackungsmaterialien wie Papier oder Pappe, eingesetzt wird. Insbesondere werden vom Begriff "Klebstoff" im Rahmen des vorliegenden Textes Schmiezklebstoffe, Dispersionsklebstoffe, Haftklebstoffe, Schmelz-Haftklebstoffe und dergleichen verstanden.

Unter "Nanopartikeln" werden im Rahmen der vorliegenden Erfindung Feststoffpartikel verstanden, die eine Teilchengröße von etwa 1 bis etwa 1000 nm, beispielsweise etwa 2 bis etwa 500 nm oder etwa 5 bis etwa 300 nm, z.B. etwa 200 nm oder etwa 30 bis etwa 100 nm umfassen, Die Größenangaben bezieht sich dabei auf die Gesamtheit der im Klebstoff enthaltenen Nanopartikel, wobei wenigstens 90 Gew.-% der Nanopartikel die o.g. Größenangaben erfüllen sollen.

Weiterhin zum Einsatz als Nanopartikel im Rahmen der vorliegenden Erfindung geeignet sind Werkstoffe wie Wolframit (FeMnWO₄) Ferberit (FeWO₄), dauermagnetische Aluminium-Nickel-Cobalt Legierungen, die als Hauptbestandteile Eisen, Cobalt, Nickel, Aluminium, Kupfer oder Titan oder Gemische aus zwei oder mehr davon enthalten. Weiterhin sind Legierungen aus Platin und Cobalt, Legierungen aus Eisen, Cobalt, Vanadium und Chrom, Ludwigit (Mg₂Fe³⁺[O₂/BO₃]), Vonsenit (Fe₂²⁺Fe³⁺[O₂/BO₃]), Kobaltnickelkiese der allgemeinen Formel A²⁺B³⁺₂X²⁻₄ worin A für Eisen, Cobalt, Nickel oder Kupfer steht, B für Eisen, Cobalt, Nickel oder Chrom oder ein Gemisch aus zwei oder mehr davon und X für S, Se oder Te oder ein Gemisch aus zwei oder mehr davon steht, Eisenoxide wie Eisen (II)-Oxid (FeO) oder Eisen (III)-Oxid (Fe₂O₃) in seiner ferromagnetischen Modifikation, -Fe₂O₃ (Macchiemit) mit Spinell, Magnetit (Fe₃O₄), Cobaltlegierungen wie die üblicherweise als Hochtemperaturwerkstoffe eingesetzten Legierungen mit Co-Cr-Matrix, Ni-Fe-Al-Co-Gußlegierungen mit bis zu etwa 36 Gew.-% Cobalt, Legierungen des Typs CoCrW, Chrom (IV)-Oxid (CrO₂), die der Gruppe der Ferrite zuzuordnenden oxidkeramischen Werkstoffe der allgemeinen Zusammensetzung M₂Fe³₂O₄ oder M²O*Fe₂O₃, die permanente magnetische Dipole enthalten, wobei M für Zink, Cadmium, Cobalt, Mangan, Eisen, Kupfer, Magnesium und dergleichen steht, sowie Eisen selbst, geeignet.

Die Herstellung von Macchiemit-Nanopartikein läßt sich beispielsweise durch Einsatz einer Mikroemulsionstechnologie erreichen. Hierbei wird die disperse Phase einer Mikroemulsion zur Größenbegrenzung der gebildeten Partikel eingesetzt. In einer W/O-Mikroemulsion wird ein metallhaltiges Reagenz in der dispersen wäßrigen Phase gelöst. Das Reagenz wird anschließend in der dispersen Phase zu einer Vorstufe der gewünschten magnetischen Verbindung umgesetzt, die daraufhin bereits die gewünschte Größe im Nanometerbereich aufweist. Anschließend wird mit einem vorsichtigen Oxidationsschritt das Metalloxid, insbesondere Eisenoxid in Form von Magnetit oder Macchiemit, hergestellt. Ein entsprechendes Verfahren ist beispielsweise in der US-A 5 695 901 beschrieben.

Als Klebstoffe eignen sich im Rahmen der vorliegenden Erfindung insbesondere solche Klebstoffe, wie sie zur Verklebung von Papier verwendet werden. Üblicherweise enthalten solche Klebstoffe mindestens ein organisches synthetisches Polymeres oder ein natürliches organisches Polymeres wie es in der Natur vorkommt oder aus Naturstoffen gewinnbar ist. Ebenfalls geeignet sind im Rahmen der vorliegenden Erfindung Klebstoffe, die ein Gemisch aus einem oder mehreren organischen synthetischen Polymeren und einem oder mehreren organischen Polymeren aufweisen.

Zu den organischen synthetischen Polymeren, wie sie im Rahmen der vorliegenden Erfindung in einer bevorzugten Ausführungsform eingesetzt werden, zählen beispielsweise Polyester, Polyether, Polyamide, Polyurethane, Polyacrylate, Polymethacrylate, Polyvinylacetat, Ethylen, Vinylacetatcopolymere, Propylen-Vinylacetatcopolymere, Styrol-Acrylat- sowie Styrol-Methacrylatcopolymere und dergleichen.

Der erfindungsgemäße Klebstoff mit magnetischen Nanopartikeln kann ein Schmelzklebstoff oder ein Dispersionsklebstoff in einer Ausbildung als Haftklebstoff oder als Kontaktklebstoff sein.

Der erfindungsgemäße Klebstoff kann beispielsweise als Schmelzklebstoff eingesetzt werden. Unter "Schmelzklebstoffen" werden im Sinne der vorliegenden Erfindung Klebstoffe verstanden, die bei Raumtemperatur fest sowie wenigstens weitgehend wasser- und lösemittelfrei sind. Schmelzklebstoffe werden aus der Schmelze auf zu verklebenden Papierlagen aufgetragen und binden beim Abkühlen unter Verfestigung physikalisch ab. Als Schmelzklebstoffe sind beispielsweise organische Polymere wie Polyester, Polyurethane, Polyamide, Polyalkylenoxide oder Polymerisate, beispielsweise Ethylen-Vinylacetat Copolymere, oder Gemische aus zwei oder mehr der genannten Polymeren, oder Zubereitungen enthaltend eines der genannten Polymeren oder ein Gemisch aus zwei oder mehr davon, geeignet.

Als Schmelzklebstoff im Rahmen der vorliegenden Erfindung können beispielsweise Polyurethane eingesetzt werden.

Polyurethane, wie sie im Rahmen der vorliegenden Erfindung als Schmelzklebstoff einsetzbar sind, werden üblicherweise durch Umsetzung von mindestens einem Polyisocyanat, vorzugsweise einem Diisocyanat, und einer Polyolkomponente, die vorzugsweise überwiegend aus Diolen besteht, hergestellt. Die Polyolkomponente kann dabei nur ein Polyol enthalten, es kann jedoch auch ein Gemisch aus zwei oder mehr verschiedenen Polyolen als Polyolkomponente eingesetzt werden. Als Polyolkomponente oder zumindest als Bestandteil der Polyolkomponente sind beispielsweise Polyalkylenoxide geeignet.

Gegebenenfalls können Teile des Polyalkylenoxids durch andere ethergruppenhaltige hydrophobe Diole ersetzt werden, die Molekulargewichte von 250 bis 3.000, bevorzugt 300 bis 2.000, insbesondere von 500 bis 1.000 aufweisen. Konkrete Beispiele für solche Diole sind: Polypropylenglykol (PPG), Polybutylenglykol, Polytetrahydrofuran, Polybutadiendiol und Alkandiole mit 4 bis 44 C-Atomen. Bevorzugte hydrophobe Diole sind Polypropylenglykol, Polytetrahydrofuran mit einem Molekulargewicht von 500 bis 1.000 sowie 1,10-Decandiol, 1,12-Dodecandiol, 1,12-Octadecandiol, Dimerfettsäurediol, 1,2-Octandiol, 1,2-Dodecandiol, 1,2-Hexadecandiol, 1,2-Octadecandiol, 1,2-Tetradecandiol, 2-Buten-1,4-diol, 2-Butin-1,4-diol, 2,4,7,9-Tetramethyl-5-decin-4,7-diol sowie dessen Ethoxylierungsprodukte, insbesondere mit bis zu 30 Mol Ethylenoxid.

Neben den Diolen der Polyolkomponente sind Diisocyanate wesentliche Bausteine des als Schmelzklebstoff einsetzbaren Polyurethans. Dabei handelt es sich um Verbindungen der allgemeinen Struktur O=C=N-X-N=C=O, wobei X ein alipathischer, alicyclischer oder aromatischer Rest ist, vorzugsweise ein aliphatischer oder alicyclischer Rest mit 4 bis 18 C-Atomen.

Beispielsweise seien als geeignete Isocyanate 1,5-Naphthylendiisocyanat, 4,4'-Diphenylmethandiisocyanat (MDI), hydriertes MDI (H₁₂MDI), Xylylendiisocyanat (XDI), Tetramethylxylylendiisocyanat (TMXDI), 4,4'-Diphenyldimethylmethandiisocyanat, Di- und Tetraalkylendiphenylmethandiisocyanat, 4,4'-Dibenzyldiisocyanat, 1,3-Phenylendiisocyanat, 1,4-Phenylendiisocyanat, die lsomeren des Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), chlorierte und bromierte Diisocyanate, phosphorhaltige Diisocyanate, 4,4'-Di-isocyanatophenylperfluorethan, Tetramethoxybutan-1,4-diisocyanat, Butan-1,4-diisocyanat, Hexan-1,6-diisocyanat (HDI), Dicyclohexylmethandiisocyanat, Cyclohexan-1,4-diisocyanat, Ethylen-diisocyanat, Phthalsäure-bis-isocyanato-ethylester, ferner Diisocyanate mit reaktionsfähigen Halogenatomen, wie 1-Chlormethylphenyl-2,4-diisocyanat, 1-Brommethylphenyl-2,6-diisocyanat, 3,3-Bis-chlormethylether-4,4'-diphenyldiisocyanat genannt.

Schwefelhaltige Polyisocyanate erhält man beispielsweise durch Umsetzung von 2 mol Hexamethylendiisocyanat mit 1 mol Thiodiglykol oder Dihydroxydihexylsulfid. Weitere einsetzbare Diisocyanate sind beispielsweise Trimethylhexamethylendiisocyanat, 1,4-Di-isocyanatobutan, 1,12-Diisocyanatododecan und Dimerfettsäurediisocyanat. Besonders geeignet sind: Tetramethylen-, Hexamethylen, Undecan-, Dodecamethylen-, 2,2,4-Trimethylhexan-, 1,3-Cyclohexan-, 1,4-Cyclohexan-, 1,3- bzw. 1,4-Tetramethylxylol-, isophoron-, 4,4-Dicyclohexylmethan- und Lysinesterdiisocyanat. Ganz besonders bevorzugt ist das Tetramethylxylylendiisocyanat (TMXDI), insbesondere das m-TMXDI von der Fa. Cyanamid.

Zur weiteren Erhöhung des Molekulargewichts kann beispielsweise auf bekannte Weise eine Kettenverlängerung vorgenommen werden. Hierzu werden zunächst Präpolymere mit überschüssigem Diisocyanat hergestellt, die dann anschließend mit kurzkettigen Aminoalkoholen, Diolen oder Diaminen oder mit Wasser unter Erhöhung des Molekulargewichts verlängert werden.

Vorzugsweise wird das Polyurethan jedoch in einem einstufigen Verfahren hergestellt. Dabei werden beispielsweise zunächst alle Ausgangsstoffe in Gegenwart eines organischen Lösemittels bei einem Wassergehalt von weniger als 0,5 Gew.-% gemischt. Die Mischung wird auf 80 bis 200 °C, insbesondere auf 100 bis 180 °C und vorzugsweise auf 130 bis 170 °C, für ca. 1 bis 30 Stunden erhitzt. Die Reaktionszeit kann durch Anwesenheit von Katalysatoren verkürzt werden. Insbesondere sind tertiäre Amine brauchbar, z. B. Triethylamin, Dimethylbenzylamin, Bisdimethylaminoethylether und Bis-methylaminomethylphenol. Besonders geeignet sind 1-Methylimidazol, 2-Methyl-1-vinylimidazol, 1-Allylimidazol, 1-Phenylimidazol, 1,2,4,5-Tetramethylimidazol, 1-(3-Aminopropyl)imidazol, Pyrimidazol, 4-Dimethylamino-pyridin, 4-Pyrrolidinopyridin, 4-Morpholinopyridin oder 4-Methylpyridin. Vorzugsweise wird jedoch ohne Katalysator gearbeitet. Auch das Lösemittel wird zweckmäßigerweise weggelassen. Unter "Lösemitteln" werden im Rahmen des vorliegenden Textes inerte organische flüssige Stoffe mit einem Siedepunkt von weniger als 200 °C bei Normaldruck verstanden.

Wenn der erfindungsgemäße Klebstoff ein Dispersionsklebstoff sein soll, so enthält er in einer bevorzugten Ausführungsform ein organisches synthetisches Polymeres ausgewählt aus der Gruppe bestehend aus Polyacrylaten, Polymethacrylaten, Polystyrol, Polyvinylestern , Ethylenvinylacetatcopolymeren oder Acrylat-Styrolcopolymeren.

In einer weiteren bevorzugten Ausführungsform der Erfindung ist der erfindungsgemäße Klebstoff ein Dispersionsklebstoff.

Der erfindungsgemäße Klebstoff kann anstatt oder zusätzlich zu einem oder mehreren organischen synthetischen Polymeren, ein organisches natürliches Polymeres oder ein Gemisch aus zwei oder mehr davon enthalten. Unter einem "organischen natürlichen Polymeren" werden Polymere verstanden, wie sie durch einfache chemische Operationen aus Naturstoffen gewonnen werden können. Der Begriff beinhaltet im Rahmen der vorliegenden Erfindung weiterhin auch einfache Derivate von organischen natürlichen Polymeren, beispielsweise die Veresterungs- oder Alkoxylierungsderivate der Stärke oder der Cellulose.

In einer bevorzugten Ausführungsform der vorliegenden Erfindung enthält der erfindungsgemäße Klebstoff die Nanopartikel in einer Menge von 0,1 bis 50 Gew.-%, vorzugsweise in einer Menge von 1 bis 30 Gew.-%, insbesondere 2 bis 20 Gew.-%.

Der erfindungsgemäße Klebstoff enthält das organische synthetische Polymere oder das organische natürliche Polymere oder das Gemisch aus einem oder mehreren organischen synthetischen Polymeren und einem oder mehreren organischen natürlichen Polymeren in einer Menge von mindestens etwa 10 Gew.-%. Wenn der erfindungsgemäße Klebstoff als Schmelzklebstoff eingesetzt werden soll, so ist es vorteilhaft, wenn er mindestens ein synthetisches organisches Polymeres oder ein natürliches organisches Polymeres in einer größeren Menge enthält, beispielsweise mindestens etwa 50 Gew.-%.

Ebenfalls als Klebstoffe im Rahmen der vorliegenden Erfindung geeignet sind Schmelzklebstoffe, die nachvernetzende Gruppen aufweisen, wie sie üblicherweise zur Herstellung besonders wärmestandfester Verklebungen eingesetzt werden. Hierbei eignet sich insbesondere der Einsatz von Polyurethanen als synthetisches organisches Polymeres.

Bei dem erfindungsgemäßen Klebstoff kann es sich weiterhin um einen Heißsiegelklebstoff handeln. Unter "Heißsiegelklebstoffen" werden wärmeaktivierbare Klebstoffe verstanden, die als Lösung, Emulsion, Dispersion oder Schmelze auf die Oberfläche der zu versiegelnden Substrate aufgebracht werden. Dort binden sie zunächst infolge des Verdampfens der Lösemittel oder durch abkühlen zu einem nicht-klebrigen Klebstofffilm ab. Die anschließende Verklebung der Substrate erfolgt in der Regel nach deren Zusammenfügen und Zusammenpressen durch Erwärmen in Heizpressen oder im Hochfrequenzfeld. Bei Abkühlen erfolgt unter Verfestigung der Heißsiegelklebstoffschicht das Verkleben der Werkstücke. Besonders geeignet zum Einsatz in Heißsiegelklebstoffen sind beispielsweise Copolymere auf der Basis von Ethylen, (Meth)acrylaten, Vinylchlorid, Vinylidenchlorid, Vinylacetat sowie Polyamide, Polyester und Polyurethane.

Beim erfindungsgemäßen Klebstoff kann es sich weiterhin um einen Haftklebstoff handeln. Haftklebstoffe sind in der Regel viskoelastische Klebstoffe, die in lösemittelfreier Form bei 20°C permanent klebrig sind und klebfähig bleiben und bei geringer Substratspezifität bei leichtem Anpreßdruck sofort auf fast allen Substraten haften. Mit Haftklebstoffen hergestellte Klebeverbunde können meist ohne Zerstörung der verklebten Substrate gelöst werden. Im Rahmen der vorliegenden Erfindung enthalten Haftklebstoffe als organisches synthetisches Polymeres beispielsweise Natur- und Synthesekautschuke, Polyacrylate, Polyester, Polychloroprene, Polyisobutene, Polyvinylether und Polyurethane. Gegebenenfalls können die Haftklebstoffe noch Zusätze enthalten, die beispielsweise eine einseitige Wiederablösbarkeit von Papieroberflächen begünstigen.

In einer weiteren bevorzugten Ausführungsform der Erfindung ist der erfindungsgemäße Klebstoff ein Dispersionsktebstoff. Als "Dispersionsklebstoffe" werden meistens wäßrige Dispersionen von organischen Polymeren bezeichnet, die geeignet sind, Holz, Papier, Pappe, Tapeten, Leder, Filz, Kork, Textilien, Kunststoffe oder Metalle zu verkleben. Dispersionsklebstoffe binden durch Verdunsten des Dispersionsmittels (Wasser) unter Bildung eines Klebstofffilms ab. Als synthetische organische Polymere in Dispersionsklebstoffen geeignet sind beispielsweise Polyacrylate, Polymethacrylate, Polyurethane, Polyester, Polyvinylacetale, Ethylen-Vinylacetatcopolymere (EVA) und dergleichen.

Zusätzlich zu den genannten organischen synthetischen oder natürlichen Polymeren kann der erfindungsgemäße Klebstoff noch weitere Zusatzstoffe enthalten, die beispielsweise die Klebeigenschaften, das Alterungsverhalten, den Abbindevorgang oder die Adhäsion beeinflussen. So kann der Klebstoff beispielsweise sogenannte Tackifier-Harze enthalten, die sich in der Regel in natürliche und synthetische (Kunstharze) unterteilen lassen. Hierzu zählen beispielsweise Alkydharze, Epoxydharze, Melaminharze, ,Phenolharze, Urethanharze, Kohlenwasserstoffharze sowie natürliche Harze wie Colophonium, Holzterpentinöl und Tallöl. Zu den synthetischen Harzen zählen Kohlenwasserstoffharze, Ketonharze, Cumaronindenharze, Isocyanatharze und Terpen-Phenolharze.

Weiterhin können die erfindungsgemäßen Klebstoffe Lösemittel enthalten. Als Lösemittel geeignet sind beispielsweise ein oder mehrwertige Alkohole mit etwa 2 bis etwa 10 C-Atomen.

Weiterhin können die erfindungsgemäßen Klebstoffe Entschäumer enthalten. Als Entschäumer geeignet sind beispielsweise Entschäumer auf Fettalkoholbasis oder auf Silikonbasis.

Weiterhin können die Klebstoffe Schutzkolloide wie Polyvinylpyrrolidone, Polyvinylalkohole, Cellulose oder Cellulosederivate enthalten.

Weiterhin kann der erfindungsgemäße Klebstoff als Zusatzstoffe Stabilisatoren oder Antioxidantien enthalten. Hierzu zählen in der Regel Phenole, sterisch gehinderte Phenole hohen Molekulargewichts, polyfunktionelle Phenole, schwefel- und phosphorhaltige Phenole oder Amine. Als Stabilisatoren geeignet sind beispielsweise Hydrochinon, Hydrochinonmethylether 2,3-(Di-tert.-butyl)hydrochinon, 1,3,5-Trimethyl-2,4,6-tris(3,5-di-tert-butyl-4-hydroxybenzyl)benzol; Pentaerythrittetrakis-3-(3,5-di-tert-butyl-4-hydroxyphenyl)propionat; n-Octadecyl-3,5-di-tert-butyl-4-hydroxyphenyl)propionat; 4,4-Methylenbis(2,6-di-tert-butyl-phenol); 4,4-Thiobis(6-tert-butyl-o-cresol); 2,6-Di-tert-butylphenol; 6-(4-Hydroxyphenoxy)-2,4-bis(n-octylthio)-1,3,5-triazin; Di-n-Octadecyl-3,5-di-tert-butyl-4-hydroxybenzylphosphonate; 2-(n-Octylthio)ethyl-3,5-di-tert-butyl-4-hydroxybenzoat; und Sorbithexa[3-(3,5-di-tert-butyl-4-hydroxyphenyl)propionat]; sowie p-Hydroxydiphenylamin oder N,N'-Diphenylendiamin oder Phenothiazin.

Der erfindungsgemäße Klebstoff kann weiterhin Weichmacher wie Benzoatweichmacher, Phosphatweichmacher, flüssige Harzderivate oder pflanzliche und tierische Öle enthalten. Geeignet sind beispielsweise Sucrosebenzoat, Diethylenglykoldibenzoat und/oder Diethylenglykolbenzoat, bei dem etwa 50 bis etwa 95% aller Hydroxylgruppen verestert worden sind, Phosphat-Weichmacher, beispielsweise t-Butylphenyldiphenylphosphat, Polyethylenglykole und deren Derivate, beispielsweise Diphenylether von Poly(ethylenglykol), flüssige Harzderivate, beispielsweise die Methylester von hydriertem Harz, pflanzliche und tierische Öle, beispielsweise Glycerinester von Fettsäuren und deren Polymerisationsprodukte.

Ebenfalls geeignet sind Weichmacher auf Basis von Phthalsäure, insbesondere die Alkylphthalate.

Der erfindungsgemäße Klebstoff kann weiterhin Farbstoffe wie Titandioxid, Füllstoffe wie Talkum, Ton und dergleichen sowie Pigmente enthalten.

Wenn es ich bei dem erfindungsgemäßen Klebstoff um einen beispielsweise durch Einfluß von Elekltronenstrahlen oder UV-Strahlen nachvernetzenden Klebstoff handelt, können im Klebstoff noch Fotoinitiatoren als Zusatzstoffe vorhanden sein. Beispielsweise kann es sich dabei um Norrish-Type I fragmentierende Substanzen handeln wie Benzophenon, Hydrochinon, Fotoinitiatoren der Irgacure® -, Darocure® - oder Speedcure® -Reihe (Hersteller: Ciba-Geigy) handeln. Gegebenenfalls kann der erfindungsgemäße Klebstoff einen monofunktionellen Reaktiwerdünner enthalten, der beispielsweise durch Bestrahlung mit UV-Licht oder mit Elektronenstrahlen polymerisierbar ist. Hierzu eignen sich insbesondere die entsprechenden Ester der Acrylsäure oder Methacrylsäure. Beispiel für solche Ester sind u.a. N-Butylacrylat, 2-Ethylhexylacrylat, 3-Methoxybutylacrylat, 2-Phenoxyethylacrylat, Benzylacrylat oder 2-Methoxypropylacrylat.

Weiterhin können die erfindungsgemäßen Klebstoffe Emulgatoren oder Stabilisatoren oder deren Gemisch enthalten. Als Emulgatoren eignen sich in der Regel Tenside, die eine hydrophile und eine hydrophobe Gruppe aufweisen. Es kann sich dabei um anionische Emulgatoren, kationische Emulgatoren oder amphotere Emulgatoren handeln. Geeignet sind beispielsweise Kohlenwasserstoffemulgatoren mit etwa 6 bis etwa 22 Kohlenstoffatomen, wobei die Kohlenwasserstoffkette verzweigt, unverzweigt, gesättigt, ungesättigt, substituiert, aliphatisch oder aromatisch sein kann.

Im Rahmen der Herstellung der erfindungsgemäßen Klebstoffe werden das organische synthetische Polymere oder das organische natürliche Polymere oder das Gemisch aus einem oder mehreren organischen synthetischen Polymeren und einem oder mehreren organischen natürlichen Polymeren mit den Nanopartikeln und ggf. einem Lösemittel und weiteren Zusatzstoffen vermischt. Wenn der erfindungsgemäße Klebstoff ein Schmelzklebstoff sein soll, so kann die Vermischung in der Schmelze des Schmelzklebstoffs erfolgen, es ist jedoch ebenso möglich, die Nanopartikel bereits bei der Herstellung des als Schmelzklebstoff eingesetzten Polymeren zuzugeben.

Soll der erfindungsgemäße Klebstoff ein Dispersionsklebstoff sein, so lassen sich die Nanopartikel direkt in die Polymerdispersion des Dispersionsklebstoffs einarbeiten.

In einer weiteren bevorzugten Ausführungsform der Erfindung werden die Nanopartikel in einen erfindungsgemäßen Dispersionsklebstoff bereits vor der Herstellung des synthetischen organischen Polymeren zugegeben. Der erfindungsgemäße Dispersionsklebstoff wird hierbei durch eine Emulsionspolymerisation hergestellt, bei der üblicherweise Tröpfchen aus Monomeren, die zur Herstellung des späteren Polymeren erforderlich in einer wäßrigen Emulsion polymerisiert werden. Die Nanopartikel können bereits vor der Polymerisation in die Emulsion zugegeben werden, was zu einer besonders homogenen Verteilung der Nanopartikel im Dispersionsklebstoff führt.

Die Nanopartikel werden direkt an ein organisches synthetisches oder organischen natürliches Polymeres ionisch, koordinativ oder kovalent angebunden.

Hierzu werden die Nanopartikel oberflächlich derart modifiziert, daß anschließend eine Reaktion mit einer funktionellen Gruppe eines organischen natürlichen oder synthetischen Polymeren möglich ist oder der Einbau des modifizierten Nanopartikels in ein organisches synthetisches Polymeres erfolgen kann.

In einer bevorzugten Ausführungsform der Erfindung erfolgt die Modifikation der Oberfläche der Nanopartikel beispielsweise mit Silanen. Werden als Nanopartikel Oxide eingesetzt, so tragen diese Oxide in der Regel oberflächliche OH-Gruppen, die mit Silanen oder Halogensilanen unter Ausbildung einer kovalenten Si-O-Bindung reagieren können. Wenn die Silane ihrerseits über eine geeignete funktionellen Gruppe verfügen, die ein späteres Anbringen der Silane an einem Polymeren ermöglicht, so lassen sich damit die modifizierten Nanopartikel am Polymeren kovalent befestigen. Geeignete funktionelle Gruppen sind beispielsweise olefinisch ungesättigte Doppelbindungen oder geschützte OH- oder NH-Gruppen. Eine geeignete Möglichkeit zur Modifikation der Oberfläche von Nanopartikeln mit Silanverbindungen wird beispielsweise in der US-A 5,695,901 beschrieben.

Ein weiterer Gegenstand der Erfindung ist ein Verfahren zur Herstellung eines Klebstoffs, dadurch gekennzeichnet, daß ein Polymeres, paramagnetische oder ferromagnetische Nanopartikel oder deren Gemisch und ggf. Lösemittel oder weitere Zusatzstoffe oder ein Gemisch aus zwei oder mehr davon vermischt werden.

Ebenfalls Gegenstand der vorliegenden Erfindung ist die Verwendung paramagnetischer oder ferromagnetischer Nanopartikel oder eines Gemischs aus einem oder mehreren paramagnetischen und einem oder mehreren ferromagnetischen Nanopartikeln mit einer Partikelgröße von etwa 10 bis etwa 300 nm in Klebstoffen.

## Patentansprüche

1. Klebstoff, enthaltend mindestens ein organisches Polymeres oder ein Gemisch aus zwei oder mehr organischen Polymeren und paramagnetische oder ferromagnetische Nanopartikel mit einer Partikelgröße von 1 bis 1000 nm, oder deren Gemisch, wobei die Nanopartikel ausgewählt sind aus
• Oxiden von Co, Ni, Cr, Mo, W, V, Nb, Ta, Ce, Pr, Nd, Pm, Sm, Eu, Gd, Tb, Dy, Ho, Er, Tm, Yb, Lu oder Ferriten der genannten Elemente, oder ein Gemisch aus zwei oder mehr davon, oder ausgewählt sind aus
• Macchiemit, Goethit oder einem Ferrit der allgemeinen Formel MeOFe₂O₃, wobei Me für ein Element ausgewählt aus der Gruppe bestehend aus Mn, Co, Ni, Cu, Zn, Mg oder Cd steht, oder ein Gemisch aus zwei oder mehr davon,
**dadurch gekennzeichnet, daß** die Nanopartikel ionisch, koordinativ oder kovalent an das organische Polymere gebunden sind.

2. Klebstoff nach Anspruch 1, **dadurch gekennzeichnet, daß** er die Nanopartikel in einer Menge von 0,1 bis 40 Gew.-% enthält.

3. Klebstoff nach einem der Ansprüche 1 oder 2, **dadurch gekennzeichnet, daß** er ein Haftklebstoff oder ein Kontaktklebstoff ist.

4. Klebstoff nach einem der Ansprüche 1 bis 3, **dadurch gekennzeichnet, daß** er ein Schmelzklebstoff oder ein Dispersionsklebstoff ist.

5. Klebstoff nach einem der Ansprüche 1 bis 4, **dadurch gekennzeichnet, daß** als synthetisches organisches Polymeres ein Polymeres ausgewählt aus der Gruppe bestehend aus Polyacrylaten, Polymethacrylaten, Polyoxyalkylenen, Polyurethanen, Polyestern, Polystyrol, Polyethylen, Polyvinylestern, Ethylen-Vinylacetat Copolymeren; oder ein Gemisch aus zwei oder mehr davon, enthalten ist.

6. Klebstoff nach einem der Ansprüche 1 bis 5, **dadurch gekennzeichnet, daß** er als synthetisches organisches Polymeres ein Ethylen-Vinylacetat Copolymeres oder ein Gemische aus zwei oder mehr solcher Copolymeren, enthält.

## Claims

1. Adhesive containing at least one organic polymer or a mixture of two or more organic polymers and paramagnetic or ferromagnetic nanoparticles with a particle size of 1 to 1000 nm or a mixture thereof, the nanoparticles being selected from
• oxides of Co, Ni, Cr, Mo, W, V, Nb, Ta, Ce, Pr, Nd, Pm, Sm, Eu, Gd, Tb, Dy, Ho, Er, Tm, Yb, Lu or ferrites of the elements mentioned or a mixture of two or more thereof or selected from
• macchiemite, goethite or a ferrite of the general formula MeOFe₂O_{3,} Me being an element selected from the group consisting of Mn, Co, Ni, Cu, Zn, Mg or Cd or a mixture of two or more thereof,
**characterized in that** the nanoparticles are ionically, co-ordinatively or covalently bonded to the organic polymer.

2. Adhesive as claimed in claim 1, **characterized in that** it contains the nanoparticles in a quantity of 0.1 to 40% by weight.

3. Adhesive as claimed in claim 1 or 2, **characterized in that** it is a pressure-sensitive adhesive or a contact adhesive.

4. Adhesive as claimed in any of claims 1 to 3, **characterized in that** it is a hotmelt adhesive or a dispersion adhesive.

5. Adhesive as claimed in any of claims 1 to 4, **characterized in that** the synthetic organic polymer is a polymer selected from the group consisting of polyacrylates, polymethacrylates, polyoxyalkylenes, polyurethanes, polyesters, polystyrene, polyethylene, polyvinyl esters, ethylene/vinyl acetate copolymers or a mixture of two or more thereof.

6. Adhesive as claimed in any of claims 1 to 5, **characterized in that** it contains an ethylene/vinyl acetate copolymer or a mixture of two or more such copolymers as the synthetic organic polymer.

## Revendications

1. Adhésif contenant au moins un polymère organique ou un mélange de deux polymères organiques ou plus et de nanoparticules paramagnétiques ou ferromagnétiques possédant une granulométrie de 1 à 1000 nm, ou d'un mélange desdites nanoparticules, les nanoparticules étant choisies parmi le groupe comprenant :
• des oxydes de Co, Ni, Cr, Mo, W, V, Nb, Ta, Ce, Pr, Nd, Pm, Sm, Eu, Gd, Tb, Dy, Ho, Er, Tm, Yb, Lu ou des ferrites des éléments mentionnés, ou encore un mélange de deux des éléments ci-dessus ou plus, ou bien étant choisies parmi le groupe comprenant
• la macchiémite, la göthite ou une ferrite répondant à la formule générale MeOFe₂O₃ dans laquelle Me représente un élément choisi parmi le groupe constitué par Mn, Co, Ni, Cu, Zn, Mg ou Cd, ou encore un mélange de deux desdits éléments ou plus,
**caractérisé en ce que** les nanoparticules sont liées au polymère organique, par voie ionique, par coordination ou par covalence.

2. Adhésif selon la revendication 1, **caractérisé en ce qu'**il contient les nanoparticules en une quantité de 0,1 à 40 % en poids.

3. Adhésif selon l'une quelconque des revendications 1 ou 2, **caractérisé en ce qu'**il s'agit d'un adhésif autocollant ou d'un adhésif par contact.

4. Adhésif selon l'une quelconque des revendications 1 à 3, **caractérisé en ce qu'**il s'agit d'un adhésif thermofusible ou d'un adhésif de dispersion.

5. Adhésif selon l'une quelconque des revendications 1 à 4, **caractérisé en ce qu'**il contient, à titre de polymère organique synthétique, un polymère choisi parmi le groupe constitué par des polyacrylates, des polyméthacrylates, des polyoxyalkylènes, des polyuréthanes, des polyesters, du polystyrène, du polyéthylène, des esters polyvinyliques, des copolymères d'éthylène-acétate de vinyle, ou encore par un mélange de deux desdits éléments ou plus.

6. Adhésif selon l'une quelconque des revendications 1 à 5, **caractérisé en ce qu'**il contient, à titre de polymère organique synthétique, un copolymère d'éthylène-acétate de vinyle ou encore un mélange de deux copolymères de ce type ou plus.
